Europäisches Patentamt

European Patent Office

Office européen des brevets

(19)

(11) EP 0 945 263 A2

(12) EUROPÄISCHE PATENTANMELDUNG

(43) Veröffentlichungstag:
29.09.1999 Patentblatt 1999/39

(21) Anmeldenummer: 99105346.3

(22) Anmeldetag: 16.03.1999

(51) Int. Cl.$^6$: **B32B 27/36**, B32B 27/20,
B65D 65/40, G11B 5/62,
H01G 4/18

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 25.03.1998 DE 19813264

(71) Anmelder:
Mitsubishi Polyester Film GmbH
65203 Wiesbaden (DE)
(72) Erfinder:
• Peiffer, Herbert, Dr.
55126 Mainz (DE)
• Bennett, Cynthia, Dr.
55232 Alzey (DE)
• Hilkert, Gottfried, Dr.
55291 Saulheim (DE)

(74) Vertreter:
Schweitzer, Klaus, Dr. et al
Patentanwaltskanzlei Zounek,
Industriepark Kalle-Albert,
Rheingaustrasse 190-196
65203 Wiesbaden (DE)

(54) **Polyesterfolie mit an den Anwendungszweck angepasster Oberflächentopographie, Verfahren zu ihrer Herstellung und ihre Verwendung**

(57) Offenbart ist eine transparente, biaxial orientierte Polyesterfolie mit einer Basisschicht, die zu mindestens 80 Gew.-% aus einem thermoplastischen Polyester besteht, und mindestens einer Deckschicht, die dadurch gekennzeichnet ist, daß die Deckschicht aus einem Polymer oder einem Gemisch von Polymeren besteht, das mindestens 40 Gew.-% Ethylen-2,6-naphthalat-Einheiten enthält und bis zu 60 Gew.-% an Ethylen-terephthalat-Einheiten und/oder Einheiten aus cycloaliphatischen oder aromatischen Diolen und/oder Dicarbonsäuren enthält, mit der Maßgabe, daß der $T_g2$-Wert der Polyesterfolie über dem $T_g2$-Wert der Basisschicht, aber unter dem $T_g2$-Wert der Deckschicht liegt, wobei die Basisschicht Partikel enthält und der $R_a$-Wert mindestens einer Oberfläche zwischen 1 und 1000 nm liegt. Die Folie besitzt eine geringe Durchlässigkeit für Gase. Sie eignet sich besonders für Verpackungszwecke, speziell zur Verpackung von Lebens- und Genußmitteln, als Magnetbandfolie und als Kondensatorfolie.

EP 0 945 263 A2

**Beschreibung**

Die Erfindung betrifft eine transparente, biaxial orientierte Polyesterfolie mit einer Basisschicht, die zu mindestens 80 Gew.-% aus einem thermoplastischen Polyester besteht, und einer Deckschicht, wobei die Oberflächentopographie mindestens einer Oberfläche an den Anwendungszweck angepaßt ist. Die Erfindung betrifft weiterhin ein Verfahren zur Herstellung der Folie und ihre Verwendung.

In vielen Fällen wird bei Folien eine hohe Sperrwirkung gegenüber Gasen, Wasserdampf und Aromastoffen verlangt. Üblicherweise werden deshalb metallisierte oder mit Polyvinylidenchlorid (PVDC) beschichtete Polypropylenfolien verwendet. Metallisierte Polypropylenfolien sind jedoch nicht transparent und werden deshalb dort nicht eingesetzt, wo der Blick auf den Inhalt zusätzliche Werbewirksamkeit verspricht. Mit PVDC beschichtete Folien sind zwar transparent, aber die Beschichtung erfolgt - ebenso wie die Metallisierung - in einem zweiten Arbeitsgang, der die Verpackung deutlich verteuert. Ethylen-Vinylalkohol-Copolymere (EVOH) zeigen ebenfalls eine hohe Sperrwirkung. Aber mit EVOH modifizierte Folien sind besonders stark gegenüber Feuchte empfindlich, was den Anwendungsbereich einschränkt. Wegen ihrer schlechten mechanischen Eigenschaften sind sie zudem relativ dick, oder sie müssen kostenintensiv mit anderen Materialien laminiert werden. Außerdem sind sie nach Gebrauch problematisch zu entsorgen. Einige Rohstoffe sind zudem für die Herstellung von Lebensmittelverpackungen ungeeignet bzw. nicht amtlich zugelassen.

Magnetbandfolien und Kondensatorfolien sind in der Regel metallisiert oder beschichtet. Reine Polyesterfolien haben nun aber den Nachteil, daß Feuchtigkeit (Wasser) über die Folienränder in das Innere der Folien gelangen und von dort zur Grenzfläche Folie/Metall (Beschichtung) diffundiert. Dort wird das Metall (Beschichtung) hydrolytisch-oxidativ angegriffen und mit der Zeit zerstört, was zu einem Totalausfall des Magnetbandes bzw. des Kondensators führt. Hohe Temperaturen beschleunigen diesen Vorgang.

Es besteht deshalb ein Verlangen nach Verpackungsfolien, Kondensatorfolien und Magnetbandfolien, die zumindest auf einer ihrer Oberflächen eine Barriereschicht aufweisen, die eine gute Sperrwirkung gegenüber Gasen wie $O_2$, $CO_2$ etc., Wasserdampf und Aromastoffen aufweisen und gleichzeitig von ihrer Oberflächentopographie so beschaffen sind, daß sie sich für den jeweiligen Anwendungsbereich (Verpackung, Kondensator oder Magnetband) eignen.

Gelöst wird die Aufgabe durch eine biaxial orientierte Polyesterfolie mit einer Basisschicht, die zu mindestens 80 Gew.-% aus (mindestens) einem thermoplastischen Polyester besteht und mindestens einer Deckschicht, wobei die Folie dadurch gekennzeichnet ist, daß die Deckschicht(en) aus einem Polymer oder einem Gemisch von Polymeren besteht/bestehen, das mindestens 40 Gew.-% an Ethylen-2,6-naphthalat-Einheiten und bis zu 40 Gew.-% an Ethylen-terephthalat-Einheiten und/oder bis zu 60 % Einheiten aus cycloaliphatischen oder aromatischen Diolen und/oder Dicarbonsäuren enthält, mit der Maßgabe, daß der $T_g2$-Wert der Polyesterfolie über dem $T_g2$-Wert der Basisschicht, aber unter dem $T_g2$-Wert der Deckschicht liegt, wobei die Basisschicht Partikel enthält und der $R_a$-Wert mindestens einer Oberfläche zwischen 1 und 1000 nm liegt. Die erfindungsgemäße Folie weist allgemein eine Sauerstoffpermeation von weniger als 80 $cm^3/m^2$ bar d, bevorzugt weniger als 75 $cm^3/m^2$ bar d, besonders bevorzugt weniger als 70 $cm^3/m^2$ bar d auf.

Bevorzugt ist eine Polyesterfolie, in der die Polymere der Deckschicht mindestens 65 Gew.-% an Ethylen-2,6-naphthalat-Einheiten und bis zu 35 Gew.-% an Ethylen-terephthalat-Einheiten enthalten. Davon ist wiederum eine solche Polyesterfolie besonders bevorzugt, in der die Polymere der Deckschicht mindestens 70 Gew.-% an Ethylen-2,6-naphthalat-Einheiten und bis zu 30 Gew.-% an Ethylen-terephthalat-Einheiten enthalten. Die Deckschicht kann jedoch auch vollständig aus Ethylen-2,6-naphthalat-Polymeren bestehen.

Geeignete aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ring. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$Alkandisäuren besonders geeignet, wobei der Alkanteil geradkettig oder verzweigt sein kann.

Gegenstand der vorliegenden Erfindung ist auch ein Verfahren zur Herstellung dieser Folie. Es umfaßt das

a) Herstellen einer Folie aus Basis- und Deckschicht(en) durch Coextrusion,

b) biaxiale Verstrecken der Folie und

c) Thermofixieren der verstreckten Folie.

Zur Herstellung der Deckschicht werden zweckmäßig Granulate aus Polyethylenterephthalat und Polyethylen-2,6-naphthalat im gewünschten Mischungsverhältnis direkt dem Extruder zugeführt. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich Copolymere aus den Homopolymeren bilden.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längs streckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Sofern gewünscht, kann sich an die Querverstreckung nochmals eine Längsverstreckung und sogar eine weitere Querverstreckung anschließen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Von großem Vorteil bei diesem Verfahren ist, daß dem Extruder Granulate zugegeben werden können, die die Maschine nicht verkleben.

Die Basisschicht der Folie besteht bevorzugt zu mindestens 90 Gew.-% aus dem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol und Naphthalin-2,6-dicarbonsäure-Einheiten bestehen. Die restlichen Monomereinheiten stammen aus anderen Diolen bzw. Dicarbonsäuren. Geeignete Diol-Comonomere sind beispielsweise Diethylenglykol, Triethylenglykol, aliphatische Glykole der allgemeinen Formel $HO-(CH_2)_n-OH$, wobei n eine ganze Zahl von 3 bis 6 darstellt, verzweigte aliphatische Glykole mit bis zu 6 Kohlenstoff-Atomen, aromatische Diole der allgemeinen Formel $HO-C_6H_4-X-C_6H_4-OH$, wobei X für $-CH_2-$, $-C(CH)_3-$,$_2-C(CF_3)_2-$, $-O-$, $-S-$ oder $-SO_2-$ steht, oder Bisphenole der allgemeinen Formel $HO-C_6H_4-C_6H_4-OH$ eingesetzt werden.

Die Dicarbonsäure-Comonomereinheiten leiten sich bevorzugt ab von Benzoldicarbonsäuren, Naphthalindicarbonsäuren, Biphenyl-x,x'-dicarbonsäuren (insbesondere Biphenyl-4,4'-dicarbonsäure), Cyclohexandicarbonsäuren (insbesondere Cyclohexan-1,4-dicarbonsäure), Diphenylacetylen-x,x'-dicarbonsäuren (insbesondere Diphenylacetylen-4,4'-dicarbonsäure), Stilben-x,x'-dicarbonsäure oder $(C_1-C_{16})$Alkandicarbonsäuren, wobei der Alkanteil geradkettig oder verzweigt sein kann.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Verarbeitung der Polymere hat es sich als günstig erwiesen, die Polymere für die Basisschicht und die Deckschicht(en) so zu wählen, daß sich die Viskositäten der jeweiligen Polymerschmelzen nicht zu sehr unterscheiden. Im anderen Fall ist mit Fließstörungen oder Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Die Lösungsmittelviskosität ist ein Maß für das Molekulargewicht des jeweiligen Polymers und korreliert mit der Schmelzviskosität. Je nach chemischer Zusammensetzung des verwendeten Polymers ergeben sich andere Korrelationen. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie zu gewährleisten, sollte der SV-Wert der Copolymere für die Deckschicht im Bereich von 300 bis 900 liegen, vorzugsweise zwischen 400 und 800, insbesondere zwischen 500 und 700. Falls erwünscht, kann an den jeweiligen Granulaten eine Festphasenkondensation durchgeführt werden, um die benötigten Schmelzviskositäten der Materialien einzustellen. Allgemein gilt, daß sich die Schmelzviskositäten der Polymerschmelzen für Basis- und Deckschicht(en) um nicht mehr als den Faktor 5, vorzugsweise nicht mehr als den Faktor 2 bis 3, unterscheiden sollten.

Erfindungsgemäß enthält die Basisschicht Pigmente. Unter Pigmenten werden übliche anorganische und/oder organische Partikel verstanden, wie Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel. Diese werden der Basisschicht entweder als solche zugesetzt oder gelangen über Regenerat in diese. Zweckmäßigerweise liegt die Partikelkonzentration im Bereich von 0.0001 bis 5 Gew.-% (bezogen auf die Basisschicht).

Die Polymere für die Deckschicht können auf 3 verschiedene Weisen hergestellt werden:

a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.

b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.

c) PET und PEN werden als Granulat im gewünschten Verhältnis gemischt und die Mischung dem Extruder für die Deckschicht zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymere der Basisschicht identisch mit denen der Deckschicht. Diese werden der Basisschicht entweder direkt bei der Extrusion beigemischt oder sind automatisch in der Folie durch Regeneratzugabe enthalten. Der Anteil dieser Copolymere in der Basisschicht ist so gewählt, daß die Basisschicht teilkristallinen Charakter aufweist.

In einer weiteren Ausführungsform umfaßt die Folie auf der der Deckschicht abgewandten Seite eine weitere Deckschicht aus Polyethylenterephthalat, die Pigmente enthält:

Die erfindungsgemäße Folie zeigt eine überraschend hohe Sauerstoffbarriere. Werden dagegen für die Deckschicht(en) Polymere verwendet, die weniger als 40 Gew.-% Ethylen-2,6-naphthalat-Einheiten und mehr als 40 Gew.-% Ethylenterephthalat-Einheiten enthalten, dann ist die Folie in manchen Fällen zwar etwas weniger durchlässig für Sauerstoff als eine Standardpolyesterfolie (die zu 100 Gew.-% aus Polyethylenterephthalat besteht), die Durchlässigkeit ist jedoch noch immer viel zu hoch. Es wurde sogar gefunden, daß die Sauerstoffbarriere geringer ist als bei einer Standardpolyesterfolie, wenn die Deckschicht 30 bis 40 Gew.-% Ethylen-2,6-naphthalat-Einheiten und 60 bis 70 Gew.-% Ethylenterephthalat-Einheiten enthält. Selbst unter diesen Umständen kann jedoch eine Folie mit einer Deckschicht, die zwischen 5 und 40 Gew.-% Ethylen-2,6-napthalat-Einheiten und mehr als 40 Gew.-% Ethylen-terephthalat-Einheiten enthält vorteilhaft sein, wenn die Sauerstoffbarriere für die betreffende Anwendung keine entscheidende Rolle spielt.

Weiterhin zeichnen sich die erfindungsgemäßen Folien dadurch aus, daß die Glasübergangstemperatur $T_g$ des (Co)polymers bzw. der (Co)polymere der Deckschicht(en) im Vergleich zum Stand der Technik höher liegt als die Glasübergangstemperatur $T_g$ der Polymere der Basisschicht. Die Glasübergangstemperatur der eingesetzten (Co)polymere für die Deckschicht(en) liegt vorzugsweise im Bereich von 80 bis 120 °C. Bei der Bestimmung der Glasübergangstemperaturen mittels Differential Scanning Calorimetry (DSC) können die Übergänge der beiden Schichten nicht unterschieden werden.

Glasübergänge, die beim ersten Aufheizvorgang an biaxial orientierten, wärmefixierten Folien bestimmt werden (im folgenden $T_g1$ genannt), sind durch die Kristallinität sowie die molekularen Spannungen im amorphen Anteil der Proben in ihrem Ausmaß relativ gering, über einen breiten Temperaturbereich verteilt und zu höheren Temperaturen verschoben. Vor allem aufgrund von Orientierungseffekten eignen sie sich nicht zur Charakterisierung eines Polymers. Die Auflösung von DSC-Meßgeräten reicht oft nicht aus, um die wegen der Orientierung und Kristallinität kleinen und „verschmierten" Glasstufen im ersten Aufheizvorgang ($T_g1$) der einzelnen Schichten der erfindungsgemäßen Folie zu erfassen. Wenn die Proben aufgeschmolzen und dann unter ihre Glasübergangstemperatur rasch wieder abgekühlt (abgeschreckt) werden, so werden die Orientierungseffekte eliminiert. Beim erneuten Aufheizen werden dann Glasübergänge (hier als $T_g2$ bezeichnet) gemessen, die eine höhere Intensität haben und charakteristisch sind für die jeweiligen Polymere. Die Glasübergänge der einzelnen Schichten lassen sich allerdings auch hier nicht unterscheiden, weil sich die Schichten beim Aufschmelzen vermischen und die darin enthaltenen Polyester untereinander Umesterungsreaktionen eingehen. Es ist jedoch völlig ausreichend, die $T_g2$ der gesamten coextrudierten Folien mit der $T_g2$ des für die Basisschicht verwendeten Polymers zu vergleichen. In bekannten Folien liegt der $T_g2$-Wert der Basisschicht höher als der der coextrudierten Folie, während der $T_g2$-Wert der Deckschicht niedriger liegt als der der Basisschicht und auch der der coextrudierten Folie. In der erfindungsgemäßen Folie ist dies gerade umgekehrt. Hier liegt der $T_g2$-Wert der coextrudierten Folie höher als der der Basisschicht, aber unterhalb des $T_g2$-Werts der Deckschicht.

Je nach Anwendungsgebiet und gewünschter Topographie sollte zumindest eine Deckschicht, ggf. beide Deckschichten und, sofern zweckmäßig, auch die Basisschicht zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Je nach Anwendungsgebiet der Folie, sei es als Magnetbandfolie, Kondensatorfolie oder Verpackungsfolie, weisen die Folienoberflächen für diesen Einsatzzweck notwendige Oberflächentopographie(n) auf. So sollte bspw. eine typische Magnetbandfolie auf mindestens einer Oberfläche viele kleine Erhebungen aufweisen; eine Kondensatorfolie sollte auf mindestens einer Oberfläche, bevorzugt auf beiden Oberflächen, eine mittlere Anzahl von kleinen Erhebungen und eine geringe Anzahl von großen Erhebungen aufweisen; eine typische Verpackungsfolie kann bspw. auf einer ihrer Oberflächen eine Topographie aufweisen, wie sie oben für eine Kondensatorfolie beschrieben ist oder eine geringe Anzahl kleinerer Erhebungen mit großer Basisbreite aufweisen.

Diese qualitativen Aussagen über die typische Oberflächentopographie lassen sich quantitativ folgendermaßen ausdrücken:

Für Verpackungsfolien sollte für mindestens eine Folienoberfläche die Anzahl N der Erhebungen (pro mm$^2$), die Höhe h (in $\mu$m) und der Durchmesser d (in $\mu$m) der Erhebungen über folgende Gleichungen verknüpft sein:

$$-1\text{-}3,7 \cdot \log h/\mu m < \log N/mm^2 < 2,48\text{-}2,22 \log h/\mu m \text{ mit } 0,05 \ \mu m < h < 1,00 \ \mu m \tag{1}$$

$$1,7\text{-}3,86 \log d/\mu m < \log N/mm^2 < 4,7\text{-}2,7 \log d/\mu m \text{ mit } 0,2 \ \mu m < d < 10,0 \ \mu m \tag{2}$$

N in Anzahl /mm$^2$
h in $\mu$m
d in $\mu$m

Für die Verpackungsfolien hat es sich darüber hinaus als zweckmäßig erwiesen, wenn die Folienoberfläche, die durch die Ethylen-2,6-naphthalat-haltige Deckschicht (d.h. die Barriereschicht) gebildet wird, folgenden Bedingungen gehorcht:

$$\log N/mm^2 < 1,4 \text{ - } 2,5 \log h/\mu m \text{ mit } 0,05 \ \mu m < h < 1,00 \ \mu m \tag{3}$$

$$\log N/mm^2 < 3,4 \text{ - } 2,4 \log d/\mu m \text{ mit } 0,2 \ \mu m < d < 10,0 \ \mu m \tag{4}$$

N in Anzahl /mm$^2$

H in μm

d in μm

Liegt die Anzahl der Erhebungen pro mm$^2$ unter dem in (1) und (2) angegebenen Wert, so ist das Verarbeitungsverhalten der Folien ungenügend; liegt die Anzahl der Erhebungen pro mm$^2$ über dem in (1) und (2) angegebenen Wert, so wird die Optik der Folie, d.h. ihr Glanz und ihre Trübung ungenügend. Liegt die Anzahl der Erhebungen pro mm$^2$ über dem in (3) und (4) festgelegten Wert, so verschlechtert sich die Gasbarriere der Folie.

Für Magnetbandfolien sollte für mindestens eine Folienobefläche die Anzahl N der Erhebungen pro mm$^2$, die Höhe h (in μm) und der Durchmesser d (in μm) der Erhebungen über folgende Gleichungen verknüpft sein:

$$\ln 15 - 6\ h/\mu m < \ln N/mm^2 < \ln 35 - 11\ h/\mu m \text{ mit } 0{,}05\ \mu m < h < 1{,}00\ \mu m \tag{5}$$

$$\ln 1200 - d/\mu m < \ln N/mm^2 < \ln 20000 - 2\ d/\mu m \text{ mit } 0{,}2\ \mu m < d\ 10\ \mu m \tag{6}$$

wobei für (5) und (6) die Gesamtanzahl an Erhebungen N pro mm$^2$ zwischen 8000 und 40000 liegt.

Liegt die Anzahl der Erhebungen pro mm$^2$ unter dem in (5) und (6) angegebenen Wert, so blockt die Folie und ist nicht wickelbar; liegt N über dem in (5) und (6) angegebenen Wert, so sind die elektromagnetischen Eigenschaften der aus dieser Folie hergestellten Magnetbänder unzureichend. Die Magnetbänder zeigen "drop-outs" und das Signal/Rasch-Verhältnis ist zu gering.

Für Kondensatorfolien sollte für mindestens eine Folienoberfläche die Anzahl N der Erhebungen pro mm$^2$, die Höhe h (in μm) und der Durchmesser d (in μm) der Erhebungen für folgende Gleichungen verknüpft sein:

$$0{,}3 - 2 \log h/\mu m < \log N/mm^2 < 1 - 7 \log h/\mu m \text{ mit } 0{,}05\ \mu m < h < 1{,}00\ \mu m \tag{7}$$

$$3 - 2 \log d/\mu m < \log N/mm^2 < 4 - 7 \log d/\mu m \text{ mit } 0{,}2\ \mu m < d < 10{,}0\ \mu m \tag{8}$$

wobei für (7) und (8) die Gesamtanzahl an Erhebungen N pro mm$^2$ zwischen 5000 und 50000 liegt.

Liegt die Anzahl der Erhebungen pro mm$^2$ unter dem in (7) und (8) angegebenen Wert, so ist die Folie nicht mehr verarbeitbar bzw. wickelbar; liegt N oberhalb des in (7) und (8) angegebenen Wertes so ist die Kapazitätsausbeute der aus diesen Folien hergestellten Kondensatoren schlecht.

Die zuvor beschriebenen Oberflächetopographien werden erreicht durch die Hinzugabe (bzw. das Vorhandensein) von Partikeln in der/den Deckschicht(en). Als Partikel können prinzipiell die oben beschriebenen Pigmente eingesetzt werden. Insbesondere eignen sich für Kondensatorfolien und Verpackungsfolien gefällte Kieselsäuren und ggf. pyrogene Kieselsäuren, wobei die gefällten Kieselsäuren zweckmäßigerweise Korngrößen im Bereich von 0,5 bis 10 μm aufweisen und die pyrogenen Kieselsäuren Sekundärkorngrößen von 200 bis 600 nm aufweisen (bei Primärkorngrößen von 20 bis 60 nm). Die durch die Gleichungen (1) bis (4) und (7) und (8) geforderte Anzahl an Erhebungen kann - bei üblichen Deckschichtdicken im Bereich von 0,1 bis 3 μm - erreicht werden durch Hinzugabe der oben beschriebenen Partikel in Konzentrationen von 500 ppm bis 20000 ppm (bezogen auf das Gewicht der Deckschicht).

Für Magnetbandfolien eignen sich insbesondere Calciumcarbonat und ggf. Aluminiumoxid. Die Calciumcarbonatpartikel weisen üblicherweise Korngrößen im Bereich von 0,1 bis 0,8 μm auf, wobei eine enge Korngrößenverteilung anzustreben ist (d99 < 1 μm), idealerweise monodisperse Verteilung) Die Aluminiumnoxidpartikel besitzen üblicherweise Sekundärkorngrößen im Bereich von 200 bis 800 nm (bei Primärkorngrößen im Bereich von 20 bis 80 nm). Die durch die Gleichungen (5) und (6) geforderte Anzahl an Erhebungen kann - bei üblichen Deckschichtendicken im Bereich von 0,1 bis 3 μm - erreicht werden durch Hinzugabe der oben beschriebenen Partikel in Konzentrationen von 1000 bis 10000 ppm (für CaCO$_3$) bzw. von 0 bis 10000 ppm (für Al$_2$O$_3$) (jeweils bezogen auf das Gewicht der Deckschicht).

Zur Einstellung weiterer gewünschter Eigenschaften kann die Folie corona- bzw. flammvorbehandelt und/oder beschichtet sein. Typische Beschichtungen sind haftvermittelnde, antistatisch, schlupfverbessernd oder dehäsiv wirkende Schichten. Es bietet sich an, diese zusätzlichen Schichten über in-line coating mittels wäßriger Dispersionen vor der Querverstreckung auf die Folie aufzubringen.

Die erfindungsgemäße Polyesterfolie enthält vorzugsweise noch eine zweite Deckschicht. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere oder Polymermischungen und Partikelsysteme enthalten kann, welche aber nicht mit der der ersten Deckschicht identisch sein müssen. Die zweite Deckschicht kann auch andere gängige Deckschichtpolymere enthalten. Somit kann die zweite Deckschicht die gleiche oder eine andere Topographie beschreiben als die erste Deckschicht.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 $\mu$m und liegt vorzugsweise im Bereich von 0,5 bis 15 $\mu$m, insbesondere 1,0 bis 10 $\mu$m.

Die Dicke der Deckschicht(en) ist im allgemeinen größer als 0,1 $\mu$m und liegt vorzugsweise im Bereich von 0,2 bis 5 $\mu$m, insbesondere 0,2 bis 4 $\mu$m, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 100 $\mu$m, insbesondere 5 bis 50 $\mu$m, vorzugsweise 6 bis 30 $\mu$m, wobei die Basisschicht einen Anteil von vorzugsweise etwa 40 bis 90 % an der Gesamtdicke hat.

Ein weiterer Vorteil besteht darin, daß die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einem Anteil von bis 50 Gew.-%, bevorzugt 10 bis 50 Gew.-%, jeweils bezogen auf das Gesamtgewicht der Folie, wiederverwendet werden kann, ohne daß dabei die physikalischen Eigenschaften der Folie nennenswert negativ beeinflußt werden.

Die Folie eignet sich hervorragend zum Verpacken von Nahrungs- und Genußmitteln, als Kondensatorfolie oder als Magnetbandfolie.

Zur Charakterisierung der Rohstoffe und der Folien wurden die folgenden Methoden benutzt:

Die Messung der Sauerstoffbarriere erfolgte mit einem OX-TRAN 2/20 von Mocon Modern Controls (USA) entsprechend DIN 53 380, Teil 3.

Zur Bestimmung des SV-Wertes (SV = solvent viscosity) wurde eine Polyester-Probe in einem Lösungsmittel (Dichloressigsäure) gelöst (1 Gew.-%ig). Die Viskosität dieser Lösung sowie die Viskosität des reinen Lösungsmittels wurden in einem Ubbelohde-Viskosimeter gemessen. Aus den beiden Werten wurde der Quotient (= relative Viskosität $\eta$ rel) ermittelt, davon 1,000 abgezogen und dieser Wert mit 1000 multipliziert. Das Resultat war der SV-Wert („solution viscosity").

Die Reibung wurde nach DIN 53 375 bestimmt. Die Gleitreibungszahl wurde 14 Tage nach der Produktion gemessen.

Die Rauhigkeit $R_a$ der Folie wurde nach DIN 4768 bei einem cut-off von 0,25 mm bestimmt.

Die Oberflächenspannung wurde mit der sogenannten Tintenmethode (DIN 53 364) bestimmt.

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Die Glasübergangstemperaturen $T_g1$ und $T_g2$ wurden anhand von Folienproben mit Hilfe der DSC (Differential Scanning Calorimetry) bestimmt. Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang $T_g1$ ermittelt. Die Proben zeigten vielfach eine Enthalpierelaxation (ein Peak) zu Beginn des stufenförmigen Glasübergangs. Als $T_g1$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet. Möglicherweise überdeckten die peakförmigen Enthalpierelaxationen die Feinstruktur der Stufe oder die Auflösung des Gerätes war für eine Auftrennung der kleinen, „verschmierten" Übergänge von orientierten, kristallinen Proben nicht ausreichend. Um die thermische Vorgeschichte zu eliminieren, wurden die Proben nach dem Aufheizen 5 Minuten bei 300° C gehalten und dann anschließend mit flüssigem Stickstoff abgeschreckt. Aus dem Thermogramm für das zweite Aufheizen wurde die Temperatur für den Glasübergang $T_g2$ als die Temperatur bei halber Stufenhöhe entnommen.

Die Bestimmung der Größenverteilung von Erhebungen auf Folienoberflächen erfolgt mit einem Rasterelektronenmikroskop und einem Bildanalysesystem. Verwendet wird das Rasterelektronenmikroskop XL30CP der Fa. Philips mit einem integrierten Bildanalyseprogramm AnalySIS der Fa. Soft-Imaging System.

Für diese Messungen werden Folienproben flach auf einen Probenhalter aufgebracht. Anschließend werden diese unter einem Winkel $\alpha$ mit einer dünnen Metallschicht (z.B. aus Silber) schräg bedampft. Dabei ist $\alpha$ der Winkel zwischen Probenoberfläche und der Ausbreitungsrichtung des Metalldampfes. Durch diese Schrägbedampfung entsteht hinter der Erhebung ein Schattenwurf. Da die Schatten noch nicht elektrisch leitfähig sind, wird die Probe anschließend noch mit einem zweiten Metall (z.B. Gold) bedampft oder gesputtert, wobei die zweite Beschichtung senkrecht auf die Probenoberfläche auftrifft und somit bei der zweiten Beschichtung keine Schatten entstehen.

Die so präparierten Probenoberflächen werden in einem Rasterelektronenmikroskop (REM) abgebildet. Die Schatten der Erhebungen sind infolge des Materialkontrastes der Metalle sichtbar. Die Probe wird im REM so orientiert, daß die Schatten parallel zu einem Bildrand verlaufen. Für die Bildaufnahme werden folgende Bedingungen an REM eingestellt: Sekundärelektronendetektor, Arbeitsabstand 10 mm, Beschleunigungsspannung 10 kv und Spot 4,5. Die Helligkeit und der Kontrast werden so eingestellt, daß sämtliche Bildinformationen als Grauwerte dargestellt werden und die Intensität des Grundrauschens so klein ist, daß er nicht als Schatten detektiert wird. Die Länge der Schatten wird mit der Bildanalyse ausgemessen. Der Schwellwert für die Schattenerkennung wird auf die Stelle gelegt, wo die zweite Ableitung der Grauwertverteilung des Bildes den Nullpunkt durchquert. Vor der Schattenerkennung wird das Bild mit einem NxN-Filter (Größe 3, 1 Iteration) geglättet. Durch die Setzung eines Rahmens ("frame") wird sichergestellt, daß Erhebungen, die im Bild nicht vollständig abgebildet werden, nicht mitgemessen werden. Die Vergrößerung der Rahmengröße und die Anzahl der ausgewerteten Bilder werden so gewählt, daß insgesamt 0,36 mm$^2$ Folienober-fläche ausgewertet werden.

Die Höhe der einzelnen Erhebungen wird aus den einzelnen Schattenlängen mit folgender Beziehung errech-net:

$$h = (\tan \alpha) * L$$

wobei h die Höhe der Erhebung, $\alpha$ der Bedampfungswinkel und L die Schattenlänge ist. Die so ermittelten Erhebungen werden in Klassen eingeteilt, um zu einer Häufigkeitsverteilung zu kommen. Die Einteilung erfolgt in 0,05 $\mu$m breite Klassen zwischen 0 und 1 $\mu$m, wobei die kleinste Klasse (0 bis 0,05 $\mu$m) für weitere Auswertungen nicht verwendet wird. Die Durchmesser (Ausbreitung senkrecht zur Schattenwurfsrichtung) der Erhebungen wird in ähnlicher Weise in 0,2 $\mu$m breite Klassen von 0 bis 10 $\mu$m eingestuft, wobei auch hier die kleinste Klasse für die weitere Auswertung nicht verwendet wird.

Die folgenden Beispiele illustrieren die Erfindung. Die verwendeten Produkte (Warenzeichen und Herstellerfirma) sind jeweils nur einmal angegeben und beziehen sich dann auch auf die folgenden Beispiele.

**Beispiel 1**

Das Polymer für die Deckschicht wurde durch gemeinsame Polykondensation hergestellt. Dazu wurden Dimethylterephthalat und Naphthalin-2,6-dicarbonsäure-dimethylester in einem Reaktor im Molverhältnis 0,54 : 1,00 (entspricht einer Zusammensetzung von 30 Gew.-% Ethylenterephthalat-Einheiten und 70 Gew.-% Ethylen-2,6-naphthalat-Einheiten im fertigen Copolymer) gemischt und mit Ethyenglykol und 300 ppm Manganacetat als Katalysator versetzt. Bei einer Temperatur von 160 bis 250 °C und bei Atmosphärendruck wurde unter Rühren die Umesterung durchgeführt. Das dabei entstehende Methanol wurde abdestilliert. Anschließend wurde eine äquimolare Menge phosphorige Säure als Stabilisator und 400 ppm Antimontrioxid als Katalysator zugegeben. Bei 280 °C und einem Druck von weniger als 1 mbar wurde dann unter Rühren die Polykondensation durchgeführt. Anhand des am Rührer gemessenen Drehmoments ließ sich das erreichte Molekulargewicht ermitteln. Die Schmelze wurde nach Ende der Reaktion mit Stickstoff aus dem Reaktor gedrückt und granuliert.

**Beispiel 2**

Es wurden handelsübliche Polyethylenterephthalat- und Polyethylen-2,6-naphthalat-Granulate verwendet. Die Granulate wurden jeweils etwa 4 h bei einer Temperatur von etwa 160 °C getrocknet und kristallisiert. Anschließend wurden die beiden Materialien in einem Verhältnis von 30 : 70 (30 Gew.-% Polyethylenterephthalat- und 70 Gew.-% Polyethylen-2,6-naphthalat) in einen Mischer gegeben und dort unter Rühren homogenisiert. Die Mischung wurde anschließend in einem Zweischnecken-Compounder (ZSK der Fa. Werner und Pfleiderer, Stuttgart) bei einer Temperatur von etwa 300 °C und einer Verweilzeit von ca. 3 min extrudiert. Die Schmelze wurde zu Strängen extrudiert und in Form von Chips geschnitten. In der Extrusion entstand ein Copolymer durch Reaktion zwischen dem Polyethylenterephthalat und Polyethylen-2,6-naphthalat.

**Beispiel 3**

Beispiel 2 wurde wiederholt mit der Abweichung, daß Chips aus Polyethylenterephthalat und Polyethylen-2,6-naphthalat in einem Mischungsverhältnis von 3 : 7 direkt dem Einschneckenextruder für die Folienherstellung zugeführt wurden. Dort wurden die beiden Materialien bei etwa 300 °C extrudiert. Die Schmelze wurde filtriert und in einer Mehrschichtdüse zu einem Flachfilm ausgeformt und als Deckschicht der Basisschicht überlagert. Der Mehrschichtfilm wurde über die Düsenlippe ausgestoßen und auf einer Kühlwalze verfestigt.

Die Verweilzeit der beiden Polymere in der Extrusion betrug ca. 5 min. Die weiteren Verarbeitungsschritte waren wie oben angegeben. Auch hier entstand das Copolymer in der Extrusion bei den angegebenen Bedingungen.

**Beispiel 4**

Chips aus Polyethylenterephthalat wurden bei 160 °C auf eine Restfeuchte von weniger als 50 ppm getrocknet und dem Extruder für die Basisschicht zugeführt. Daneben wurden Chips aus Polyethylenterephthalat und Polyethylen-2,6-naphthalat (im Gewichtsverhältnis von 3 : 7) ebenfalls bei 160 °C auf eine Restfeuchte von 50 ppm getrocknet und den beiden Extrudern für die Deckschichten zugeführt. Die Bedingungen im Extruder für die Deckschichten waren wie in Beispiel 3.

Durch Coextrusion und anschließende stufenweise Orientierung in Längs- und Querrichtung wurde dann eine transparente dreischichtige Folie mit symmetrischem Aufbau und einer Gesamtdicke von 12 μm hergestellt. Die Deckschichten hatten eine Dicke von jeweils 2,0 μm.

Basisschicht:

95 Gew.-%   Polyethylenterephthalat (RT 49 von Hoechst AG) mit einem SV-Wert von 800 und
5 Gew.-%   Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 μm.

Deckschichten:

70 Gew.-%   Polyethylen-2,6-naphthalat (®Polyclear N 100 Prepolymer von Hoechst AG) mit einem SV-Wert von 800,
20 Gew.-%   Polyethylenterephthalat mit einem SV-Wert von 800 und
10 Gew.-%   Masterbatch aus 99,0 Gew.-% Polyethylenterephthalat und 1,0 Gew.-% Kieselsäurepartikel mit einer mittleren Teilchengröße von 2,0 μm.

Die einzelnen Verfahrensschritte waren:

| Extrusion | Temperaturen: | Deckschicht: | 300 °C |
|---|---|---|---|
|  |  | Basisschicht: | 300 °C |
|  | Temperatur der Abzugswalze: |  | 30 °C |
|  | Düsenspaltweite: |  | 1 mm |
|  | Temperatur der Abzugswalze: |  | 30 °C |
| Längs strek-kung | Temperatur: |  | 85-135 °C |
|  | Längsstreckverhältnis: |  | 4,0 : 1 |
| Querstreckung | Temperatur: |  | 85-135 °C |
|  | Querstreckverhältnis: |  | 4,0 : 1 |
| Fixierung | Temperatur: |  | 230 °C |

Die Folie hatte die geforderte Gasbarriere und erfüllt die Gleichungen (1) bis (4).

**Beispiel 5**

Analog zu Beispiel 4 wurde durch Coextrusion eine dreischichtige Folie mit einer Gesamtdicke von 12 μm hergestellt. Die Deckschicht A hatte eine Dicke von 2,0 μm, die Deckschicht C von 1,5 μm.

Basisschicht:

100 Gew.-%   Polyethylenterephthalat mit einem SV-Wert von 800

Deckschicht A:

70 Gew.-%   Polyethylen-2,6-naphthalat mit einem SV-Wert von 800,
20 Gew.-%   Polyethylenterephthalat mit einem SV-Wert von 800 und
10 Gew.-%   Masterbatch aus 99,0 Gew.-% Polyethylenterephthalat und 1,0 Gew.-% Kieselsäurepartikel mit einer mittleren Teilchengröße von 2,0 $\mu$m.

Deckschicht C:

80 Gew.-%   Polyethylenterephthalat mit einem SV-Wert von 800 und
20 Gew.-%   Masterbatch aus 99,0 Gew.-% Polyethylenterephthalat und 1,0 Gew.-% Kieselsäurepartikel, die zu 50 % eine mittlere Teilchengröße von 2,5 $\mu$m und zu 50 % eine mittlere Teilchengröße von 1,0 $\mu$m hatten.

Die Verfahrensbedingungen waren für alle Schichten wie im Beispiel 4.

**Beispiel 6**

Eine coextrudierte Folie mit der Rezeptur gemäß Beispiel 5, bei der die Deckschicht A 2,0 $\mu$m dick und wie folgt zusammengesetzt war:

90 Gew.-%   Polyethylen-2,6-naphthalat mit einem SV-Wert von 800 und
10 Gew.-%   Masterbatch aus 99,0 Gew.-% Polyethylenterephthalat und 1,0 Gew.-% Kieselsäurepartikel mit einer mittleren Teilchengröße von 1,0 $\mu$m,

wurde unter den Verfahrensbedingungen gemäß Beispiel 4 hergestellt.

**Beispiel 7**

Eine coextrudierte Folie mit der Rezeptur gemäß Beispiel 5, bei der die Deckschicht A 2,5 $\mu$m dick und wie folgt zusammengesetzt war:

90 Gew.-%   Polyethylen-2,6-naphthalat mit einem SV-Wert von 800,
10 Gew.-%   Masterbatch aus 99,0 Gew.-% Polyethylen-2,6-naphthalat mit einem SV-Wert von 800 und 1,0 Gew.-% Kieselsäurepartikel mit einer mittleren Teilchengröße von 1,0 $\mu$m,

wurde unter den Verfahrensbedingungen gemäß Beispiel 4 hergestellt. Doch wurden jetzt die Temperaturen bei der Längs- und Querstreckung um etwa 10 °C angehoben.

**Beispiel 8**

Analog zu Beispiel 5 wurde durch Coextrusion eine dreischichtige Folie mit einer Basisschicht und zwei Deckschichten hergestellt. Die Gesamtdicke der Folie betrug 12 $\mu$m. Die Deckschicht A hatte dabei eine Dicke von 3, die Deckschicht C von 1,5 $\mu$m.

Basisschicht:

100 Gew.-%  Polyethylenterephthalat mit einem SV-Wert von 800

Deckschicht A:

100 Gew.-%  Polyethylen-2,6-naphthalat mit einem SV-Wert von 800

Deckschicht C:

80 Gew.-%  Polyethylenterephthalat mit einem SV-Wert von 800 und
20 Gew.-%  Masterbatch aus 99,0 Gew.-% Polyethylenterephthalat und 1,0 Gew.-% Kieselsäurepartikel, die zu 50 % eine mittlere Teilchengröße von 2,5 μm und zu 50 % eine mittlere Teilchengröße von 1,0 μm hatten.

Die Verfahrensbedingungen waren für alle Schichten wie in Beispiel 7 angegeben.

**Beispiel 9**

Analog zu Beispiel 4 wurde eine coextrudierte Folie hergestellt, wobei jetzt das Copolymer für die Deckschichten nach Beispiel 2 hergestellt wurde. Sonst waren die Bedingungen wie im Beispiel 4 angegeben.

**Beispiel 10**

Analog zu Beispiel 4 wurde eine coextrudierte Folie hergestellt, wobei jetzt das Copolymer für die Deckschichten nach Beispiel 1 hergestellt wurde. Sonst waren die Bedingungen wie in Beispiel 4 angegeben.

**Beispiel 11**

In ähnlicher Weise wie in Beispiel 4 wurde durch Coextrusion eine zweischichtige Folie mit einer Basis- und einer Deckschicht und einer Gesamtdicke von 12 μm hergestellt. Die Deckschicht hatte dabei eine Dicke von 3 μm.

Basisschicht:

80 Gew.-%  Polyethylenterephthalat mit einem SV-Wert von 800 und
20 Gew.-%  Masterbatch aus 99,0 Gew.-% Polyethylenterephthalat und 1,0 Gew.-% Kieselsäurepartikel, die zu 50 % eine mittlere Teilchengröße von 2,5 μm und zu 50 % eine mittlere Teilchengröße von 1,0 μm hatten.

Deckschicht:

60 Gew.-%  Polyethylennaphthalat mit einem SV-Wert von 800,
30 Gew.-%  Polyethylenterephthalat mit einem SV-Wert von 800 und
10 Gew.-%  Masterbatch aus 99,0 Gew.-% Polyethylenterephthalat und 1,0 Gew.-% Kieselsäurepartikel mit einer mittleren Teilchengröße von 2,0 μm.

Die Verfahrensbedingungen waren für alle Schichten wie in Beispiel 4 gewählt.

**Beispiel 12**

Es wurde eine dreischichtige Folie wie im Beispiel 7 beschrieben hergestellt mit der einzigen Abweichung, daß die Dicke der Deckschicht A nur 1,0 µm betrug.

**Vergleichsbeispiel V1**

Es wurde eine Folie entsprechend Beispiel 11 hergestellt. Für die Deckschicht A wurde jedoch ein Copolyester aus 82 Gew.-% Ethylenterephthalat und 18 Gew.% Ethylenisophthalat verwendet.

**Vergleichsbeispiel V2**

Es wurde eine Folie entsprechend Beispiel 11 hergestellt. Für die Deckschicht A wurde jetzt ein Polymergemisch aus 70 Gew.-% Ethylenterephthalat und 30 Gew.-% Ethylen-2,6-naphthalat verwendet.

**Vergleichsbeispiel V3**

Es wurde eine Folie entsprechend Beispiel 11 hergestellt. Für die Deckschicht A wurde jetzt ein Polymergemisch aus 90 Gew.-% Ethylenterephthalat und 10 Gew.-% Ethylen-2,6-naphthalat verwendet.

**Vergleichsbeispiel V4**

Eine einschichtige PET-Folie wurde mit folgender Schichtzusammensetzung hergestellt:

80 Gew.-% Polyethylenterephthalat mit einem SV-Wert von 800 und
20 Gew.-% Masterbatch aus 99,0 Gew.-% Polyethylenterephthalat und 1,0 Gew.-% Kieselsäurepartikel, die zu 50 % eine mittlere Teilchengröße von 2,5 µm und zu 50 % eine mittlere Teilchengröße von 1,0 µm hatten.

**Vergleichsbeispiel V5**

Eine einschichtige PEN-Folie wurde mit folgender Zusammensetzung hergestellt:

80 Gew.-% Polyethylen-2,6-naphthalat mit einem SV-Wert von 1000 und
20 Gew.-% Masterbatch aus 99,0 Gew.-% Polyethylen-2,6-naphthalat und 1,0 Gew.-% Kieselsäurepartikel, die zu 50 % eine mittlere Teilchengröße von 2,5 µm und zu 50 % eine mittlere Teilchengröße von 1,0 µm hatten.

Die Folie zeigte zwar gute Barrierewerte; sie ist jedoch aufgrund der hohen Herstellungskosten für Lebensmittelverpackungen ungeeignet.
Die Eigenschaften der gemäß den Beispielen 4 bis 12 und V1 bis V5 hergestellten Folien sind in Tabelle 2 zusammengestellt.

Tabelle 1

| Beispiel Nr. | Ethylen-2,6-naphthalat-Einheiten in der Deckschicht A (in Gew.-%) | Ethylenterephthalat-Einheiten in der Deckschicht A (in Gew.-%) | Ethylenisophthalat-Einheiten in der Deckschicht A (in Gew.-%) | $T_g$ (in °C) |
|---|---|---|---|---|
| 4 | 70 | 30 | 0 | 82.5 |
| 5 | 70 | 30 | 0 | 81.0 |
| 6 | 90 | 10 | 0 | 86.0 |
| 7 | 100 | 0 | 0 | 90.0 |
| 8 | 100 | 0 | 0 | 90.0 |
| 9 | 70 | 30 | 0 | 82.5 |
| 10 | 70 | 30 | 0 | 82.5 |
| 11 | 60 | 40 | 0 | 83.0 |

Tabelle 1 (fortgesetzt)

| Beispiel Nr. | Ethylen-2,6-naphthalat-Einheiten in der Deckschicht A (in Gew.-%) | Ethylenterephthalat-Einheiten in der Deckschicht A (in Gew.-%) | Ethylenisophthalat-Einheiten in der Deckschicht A (in Gew.-%) | $T_g$ (in °C) |
|---|---|---|---|---|
| 12 | 100 | 0 | 0 | 86.0 |
| V1 | 0 | 82 | 18 | 72.0 |
| V2 | 30 | 0 | 0 | 81.0 |
| V3 | 10 | 50 | 0 | 80.5 |
| V4 | 100 | 0 | 0 | 80.0 |
| V5 | 0 | 100 | 0 | 115.0 |

Tabelle 2

| Beispiel Nr. | Foliendicke (µm) | Deckschichtdicke A/C(A) (µm) | Folienaufbau | Sauerstoff-permeation ($cm^3/m^2$ bar d) | Glanz (60° Meßwinkel) | | Trübung |
|---|---|---|---|---|---|---|---|
| | | | | | A-Seite | C-Seite | |
| 4 | 12 | 2,0/2,0 | ABA | 70 | 175 | 175 | 2,5 |
| 5 | 12 | 2,0/1,5 | ABC | 80 | 174 | 175 | 2,6 |
| 6 | 12 | 2,0/1,5 | ABC | 65 | 176 | 175 | 2,5 |
| 7 | 12 | 2,5/1,5 | ABC | 55 | 155 | 155 | 4,0 |
| 8 | 12 | 3,0/1,5 | ABC | 45 | 160 | 155 | 4,0 |
| 9 | 12 | 2,0/2.0 | ABA | 70 | 175 | 175 | 2,5 |
| 10 | 12 | 2,0/2,0 | ABA | 70 | 175 | 175 | 2,5 |
| 11 | 12 | 3,0 | AB | 80 | 175 | 178 | 1,5 |
| 12 | 12 | 1,0/1,0 | ABC | 62 | 160 | 165 | 3,5 |
| V1 | 12 | 3,0 | AB | 102 | 145 | 160 | 3,0 |
| V2 | 12 | 3,0 | AB | 110 | 120 | 150 | 6,5 |
| V3 | 12 | 3,0 | AB | 95 | 175 | 175 | 1,5 |
| V4 | 12 | 0 | A | 100 | 175 | 178 | 4,0 |
| V5 | 12 | 0 | A | 30 | 175 | 178 | 4,0 |

**Patentansprüche**

1. Transparente, biaxial orientierte Polyesterfolie mit einer Basisschicht, die zu mindestens 80 Gew.-% aus einem thermoplastischen Polyester besteht, und mindestens einer Deckschicht, dadurch gekennzeichnet, daß die Deckschicht aus einem Polymer oder einem Gemisch von Polymeren besteht, das mindestens 40 Gew.-% Ethylen-2,6-naphthalat-Einheiten enthält und bis zu 40 Gew.-% an Ethylen-terephthalat-Einheiten und ggf. bis zu 60 Gew.-% an Einheiten aus cycloaliphatischen oder aromatischen Diolen und/oder Dicarbonsäuren enthält, mit der Maßgabe, daß der $T_g2$-Wert der Polyesterfolie über dem $T_g2$-Wert der Basisschicht, aber unter dem $T_g2$-Wert der Deckschicht liegt und die Basisschicht Partikel enthält, ausgenommen $SiO_3$-Partikel mit einem Korndurchmesser von 4,5 µm, und wobei mindestens eine Folienoberfläche einen $R_a$-Wert von 1 bis 1000 nm aufweist.

2. Folie gemäß Anspruch 1, dadurch gekennzeichnet, daß die Deckschicht mindestens 65 Gew.-%, bevorzugt mindestens 70 Gew.-%, an Ethylen-2,6-naphthalat-Einheiten enthält.

3. Folie gemäß Anspruch 1 oder 2, dadurch gekennzeichnet, daß sie eine Sauerstoffpermeation von weniger als 80 $cm^3/m^2$ bar d, bevorzugt weniger als 75 $cm^3/m^2$ bar d, besonders bevorzugt weniger als 70 $cm^3/m^2$ bar d, aufweist.

4. Folie gemäß einem oder mehreren der Ansprüche 1 bis 3, dadurch gekennzeichnet, daß die Deckschicht eine Dicke von 0,2 bis 6 $\mu$m, vorzugsweise von 0,3 bis 5,5 $\mu$m, besonders bevorzugt von 0,3 bis 5,0 $\mu$m, aufweist.

5. Folie gemäß einem oder mehreren der Ansprüche 1 bis 4, dadurch gekennzeichnet, daß sie zweischichtig ist und aus der Basisschicht und der Deckschicht besteht.

6. Folie gemäß einem oder mehreren der Ansprüche 1 bis 4, dadurch gekennzeichnet, daß sie dreischichtig ist und aus der Basisschicht und je einer Deckschicht auf beiden Seiten der Basisschicht besteht.

7. Folie nach einem oder mehreren der Ansprüche 1 bis 6, dadurch gekennzeichnet, daß mindestens eine Seite der Folie eine Anzahl von Erhebungen N pro $mm^2$ aufweist, die mit ihren jeweiligen Höhen h und Durchmesser d über folgende Gleichungen korreliert sind

$$-1 - 3,7 \log h/\mu m < \log N/mm^2 < 2,48 - 2,22 \log h/\mu m \text{ mit } 0,05 \ \mu m < h < 1,00 \ \mu m \qquad (1)$$

$$1,7 - 3,86 \log d/\mu m < \log N/mm^2 < 4,7 - 2,7 \log d/\mu m \text{ mit } 0,2 \ \mu m < d < 10,0 \ \mu m \qquad (2)$$

8. Folie nach einem oder mehreren der Ansprüche 1 bis 7, dadurch gekennzeichnet, daß die PEN enthaltende Deckschicht eine Anzahl von Erhebungen N pro $mm^2$ Folienoberfläche aufweist, die mit ihren jeweiligen Höhen h und Durchmesser d über folgende Gleichungen korreliert sind

$$\log N/mm^2 < 1,4 - 2,5 \log h/\mu m \text{ mit } 0,05 \ \mu m < h < 1,00 \ \mu m \qquad (3)$$

$$\log N/mm^2 < 3,4 - 2,4 \log d/\mu m \text{ mit } 0,2 \ \mu m < d < 10,0 \ \mu m \qquad (4)$$

9. Folie nach einem oder mehreren der Ansprüche 1 bis 8, dadurch gekennzeichnet, daß der $R_a$-Wert zwischen 30 und 80 nm liegt.

10. Transparente, biaxial orientierte Polyesterfolie mit einer Basisschicht, die zu mindestens 80 Gew.-% aus einem thermoplastischen Polyester besteht, und mindestens einer Deckschicht, dadurch gekennzeichnet, daß die Deckschicht aus einem Polyester oder einem Gemisch von Polymeren besteht, das mindestens 5 Gew.-% Ethylen-2,6-naphthalat-Einheiten enthält und bis zu 40 Gew.-% an Ethylen-terephthalat-Einheiten und ggf. bis zu 60 Gew.-% an Einheiten aus cycloaliphatischen oder aromatischen Diolen und/oder Dicarbonsäure enthält, mit der Maßgabe, daß der $T_g2$-Wert der Polyesterfolie über dem $T_g2$-Wert der Basisschicht, aber unter dem $T_g2$-Wert der Deckschicht liegt und wobei mindestens eine Seite der Folie eine Anzahl von Erhebungen N pro $mm^2$ Folienoberfläche aufweist, die mit ihren jeweiligen Höhen h und Durchmesser d über folgende Gleichungenkorreliert sind

$$\ln 15 - 6 \ h/\mu m < \ln N/mm^2 < \ln 35 - 11 \ h/\mu m \text{ mit } 0,05 \ \mu m < h < 1,00 \ \mu m \qquad (5)$$

$$\ln 1200 - d/\mu m < \ln N/mm^2 < \ln 20000 - 2 \ d/\mu m \text{ mit } 0,2 \ \mu m < d \ 10 \ \mu m \qquad (6)$$

wobei die Gesamtanzahl an Erhebungen N pro $mm^2$ zwischen 8000 und 40000 liegt.

11. Transparente, biaxial orientierte Polyesterfolie mit einer Basisschicht, die zu mindestens 80 Gew.-% aus einem thermoplastischen Polyester besteht, und mindestens einer Deckschicht, dadurch gekennzeichnet, daß die Deckschicht aus einem Polyester oder einem Gemisch von Polymeren besteht, das mindestens 5 Gew.-% Ethylen-2,6-naphthalat-Einheiten enthält und bis zu 40 Gew.-% an Ethylen-terephthalat-Einheiten und ggf. bis zu 60 Gew.-% an Einheiten aus cycloaliphatischen oder aromatischen Diolen und/oder Dicarbonsäure enthält, mit der Maßgabe, daß der $T_g2$-Wert der Polyesterfolie über dem $T_g2$-Wert der Basisschicht, aber unter dem $T_g2$-Wert der Deckschicht liegt und wobei mindestens eine Seite der Folie eine Anzahl von Erhebungen N pro $mm^2$ Folienoberfläche aufweist, die mit ihren jeweiligen Höhen h und Durchmesser d über folgende Gleichungen korreliert sind

$$-1 - 3,7 \log h/\mu m < \log N/mm^2 < 2,48 - 2,22 \log h/\mu m \text{ mit } 0,05 \ \mu m < h < 1,00 \ \mu m \qquad (1)$$

$$1{,}7 - 3{,}86 \log d/\mu m < \log N/mm^2 < 4{,}7 - 2{,}7 \log d/\mu m \text{ mit } 0{,}2 \ \mu m < d < 10{,}0 \ \mu m \qquad (2)$$

wobei die Gesamtanzahl an Erhebungen N pro $mm^2$ zwischen 5000 und 50000 liegt.

12. Verfahren zur Herstellung der Folie nach einem oder mehreren der Ansprüche 1 bis 11, umfassend die Schritte

    a) Herstellen einer Folie aus Basis- und Deckschicht(en) durch Coextrusion,
    b) biaxiales Verstrecken der Folie und
    c) Thermofixieren der verstreckten Folie.

13. Verwendung der Folie nach einem oder mehreren der Ansprüche 1 bis 11 zum Verpacken von Nahrungs- und Genußmitteln.

14. Verwendung der Folie nach Ansprüchen 1 bis 11 als Magnetbandfolie.

15. Verwendung der Folie nach Ansprüchen 1 bis 11 als Kondensatorfolie.